# EUROPEAN PATENT APPLICATION

(11) **EP 1 549 094 A1**
(43) Date of publication of application: **29.06.2005**
(21) Application number: 03027642.2
(22) Date of filing: 02.12.2003
(51) Int. Cl.: H04Q 7/38, H04L 12/56

(54) **Dynamic paging frequency adaptation in a Bluetooth network**

(71) Applicant: SIEMENS AKTIENGESELLSCHAFT, 80333 München (DE)
(72) Inventor: Mikkelsen, Soeren, 9440 Aabybro (DK)

(57) **Abstract**

A device (100) for performing page scan on a first communication channel (CH1) comprises:
- set-up means (103, 101) for performing a page scan on said first communication channel (CH1);
- a first timer (151) for defining a first time interval (T_{GAP}(108)) between successive page scans;
- a second timer (152) for defining a second time interval (T_{GAP}(106)) between successive page scans, where the second interval (T_{GAP}(106)) is shorter than the first interval (T_{GAP}(108));
wherein: the said set-up means (103, 101) are responsive to a second channel (CH2) communication means (103, 102) and adapted to:
- use the second timer (152) when a connection (CALL) on the second channel (CH2) is being initiated in the device (100); and
- use the first timer (151) when the connection on the second communication channel (CH2) has been initiated.

## Description

### Field of the invention

The invention relates to page scanning.

### Background of the invention

The recent developments in the mobile communications have significantly increased the versatility of the subscriber terminals. A subscriber terminal has constantly been evolving from a mobile phone towards an intelligent device, providing the subscriber with a plurality of services.

The developments in local communication means, especially in those utilizing low power radio frequency communications, have lead to an increasing choice of different peripherials or accessories being wirelessly connectable to the subscriber terminals. A remarkable market share of such local communication means has been obtained by Bluetooth devices. An example of such a peripherial or accessory is a wireless headset. In order to be able to communicate with the subscriber terminal, the headset has to have a connection with the subscriber terminal.

One way to establish a connection between a peripherial or accessory and the subscriber terminal is that the subscriber terminal is slave and the accessory or peripherial is master. Using the wireless headset as an example, the details for the establishment of a Bluetooth connection can be found in the Bluetooth standard, e.g. in Bluetooth specification 1.2. In the standard there is defined how the slave has to perform a page scan, i.e. listen to a physical channel, and how it should respond to the page detected.

As noted in the referred version of the specification, in choosing the manner in which the page scan is performed, a trade-off between current consumption and fast connection set-up has to be performed.

It has turned to be particularly problematic in a subscriber terminal to use the fast connection set-up, because of the larger current consumption which has always been a problem in a mobile device getting its operating power from a rechargeable battery. However, using the slow connection set-up would in some cases be particularly annoying to the user. In some cases, the slow connection set-up might even lead to missing of another connection, if the accessory or peripherial is used on a first communication channel to command the subscriber terminal to accept a connection on a second communication channel.

### Summary of the invention

Therefore it remains as an objective of the invention to improve a device and method for performing page scan on a first communication channel, i.e. enabling a faster connection set-up and still consuming less current.

This objective can be achieved by using a device according to claim 1, or by using a method according to claim 8.

The dependent claims describe various embodiments of the invention.

### Advantages of the invention

By selecting a shorter interval between two page scans when a connection on the second communication channel is being initiated; and a longer interval between two page scans after the connection on the second communication channel has been initiated, the average time for a connection set-up on a first communication channel can be shortened, in cases when a connection on the second communication channel is being initiated.

By doing this, current consumption outside the initiation of a connection on the second communication channel can be reduced from the magnitude it would have if the shorter intervals were used also in these instances.

An example of such initiating of a connection on the second communication channel is an incoming call from the cellular network. A possible use case is establishing a connection between a wireless headset and a subscriber terminal.

### Short description of the drawings

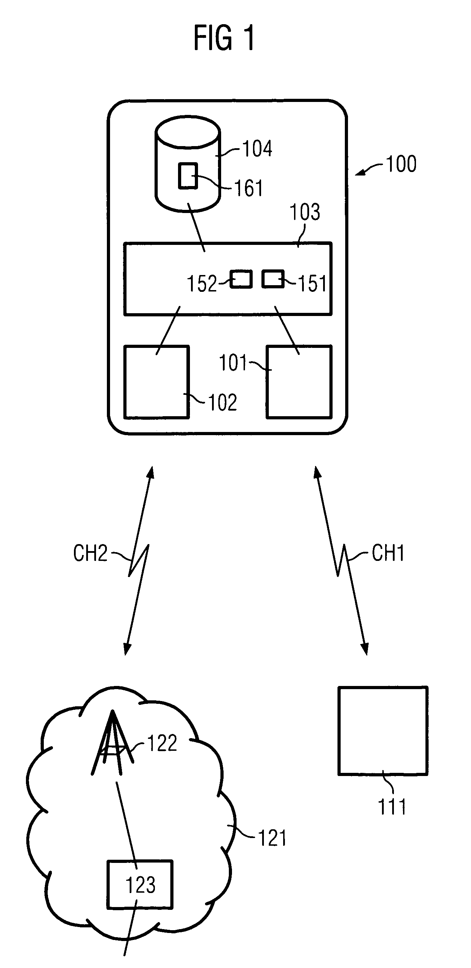

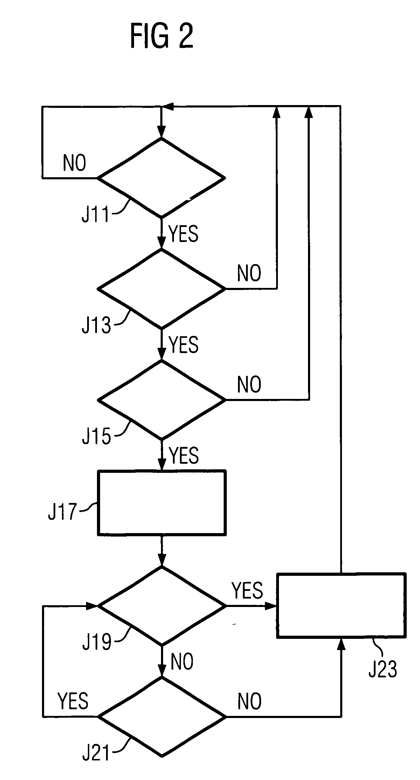

In the following, the invention is described in more detail with reference to the examples shown in Figures 1 and 2 of the accomplished drawings, of which:
Figure 1 shows a block diagram of a subscriber terminal wirelessly connectable to an accessory or a peripherial via a first connection channel CH1 and to a cellular network via a second communication channel CH2; and
Figure 2 is a flow diagram showing an example of including changing of a timer used in performing page the scan.

### Detailed description of the invention

Figure 1 shows a block diagram of a subscriber terminal 100 wirelessly connectable to an accessory or a peripherial 111 via a first connection channel CH1 and to a cellular network 121 via a second communication channel CH2.

The subscriber terminal 100 is wirelessly connectable to a peripherial or an accessory 111, such as a wireless headset. Therefore, the subscriber terminal 100 comprises communication means 101 for communication with the peripherial or accessory 111 over a first communication channel CH1. Preferably, the first connection channel CH1 is a local communication channel, such as Bluetooth communication channel. In Bluetooth communication channel, the communications are performed using a low-power radio frequency tranmitter-receivers. In the following description it is assumed that the communication channel CH1 is a Bluetooth communication channel.

Further, the subscriber terminal 100 comprises communication means 102 for communication with the cellular network 121 over a second communication channel CH2. In particular, the subscriber terminal 100 can be in connection with an element 123, such as a gateway or a switching center 123 in the cellular network 121 via a base station 122. The communication between the cellular network 121 and the subscriber terminal 100 takes place over a second communication channel CH2. The second communication channel CH2 may be as defined in any one of the relevant standards, especially such as for GSM, GPRS, UMTS. Typically, communications on the communication channel CH2 is performed on the microwave spectrum.

The subscriber terminal further comprises a central unit 103 and memory 104. According to a first aspect of the present invention, in the central unit there are the first timer 151 and the second timer 152 defined. The first and second timers 151, 152 are intended for defining intervals between two page scans. The first timer 151 defines a first interval T_{GAP}(108), whereas the second timer 152 defines a second interval T_{GAP}(106).

For a Bluetooth device, the advantageous values for the second interval T_{GAP}(106) is approximately 100 ms; and for the first interval T_{GAP}(108) approximately 2.56 seconds. These values have been specified in BLUETOOTH SPECIFICATION, Version 1.2 [vol 3] as timer values for Interlaced scans. Of course, other suitable values for the first and second intervals T_{GAP}(108), T_{GAP}(106) can be used as well.

Figure 2 is a flow diagram showing an example comprising changing of a timer used in performing page scan.

In step J11 it is tested by the central unit 103 whether or not there is an incoming call. Because the central unit 103 controls communication means 102 for communication with the cellular network 121 over the second communication channel CH2, it can detect when the cellular network 121 is paging the subscriber terminal 100.

If there is an incoming call, then in step J13 it is checked whether the using of communication means 101 for communication with the peripherial or accessory 111 over a first communication channel CH1 is enabled. If it is not enabled, the control is returned to step J11.

In step J15 it is checked, whether an entry 161 showing that an accessory or peripherial 111 is present has been previously defined. Preferably, this entry 161 is stored in the memory 104. If the entry 161 has not been defined, the control is returned to step J11.

In step J17 the fast connection setup is enabled. In other words, the second timer 152 for defining a second interval T_{GAP}(106) between two page scans is selected to be used in the communication means 101 for communication with the peripherial or accessory 111 over the first communication channel CH1.

In step J19 it is checked whether the incoming call has been accepted or a hands-free connection established. In a positive case, in step J23 the fast connection setup is disabled. In other words, in step J23 the first timer 151 for defining a first interval T_{GAP}(106) between two page scans is selected to be used in the communication means 101 for communication with the peripherial or accessory 111 over the first communication channel CH1. After step J23, the control is returned to step J11.

In the opposite case, i.e. if the incoming call has not been accepted nor a hands-free connection established, in step J21 it is checked whether the incoming call is still ringing. If the incoming call is not ringing any more, the control is passed to step J23 where the fast connection setup is disabled. If the incoming call is still ringing, the control is passed back to step J19.

In order to ensure that the user of the peripherial or accessory 111 only gets connected to the right subscriber terminal 100 and not to another subscriber terminal in the area, the entry 161 may identify the peripherial or accessory 111 that correspond to the subscriber terminal 100. Further, in the peripherial or accessory 111 there may be a similar entry identifying the right subscriber terminal 100 corresponding to the peripherial or accessory 111. In this manner, the peripherial or accessory 111 can be in a standby mode having a very low power consumption. In such a mode, the peripherial or accessory 111 is powered on but has no Bluetooth connection.

In the example of a wireless headset, when the subscriber terminal 100 is paging the user, i.e. ringing, the user can hear the ringing tone and pick up the headset and then push the accept call button. At that time the headset tries to establish the connection and to accept the call.

Using the faster connection set-up, a connection on the first communication channel CH1 can be performed approximately about 65 % faster than using a normal connection set-up.

The skilled person appreciates that the present invention is not limited by the examples of using a GSM or UMTS subscriber terminal for receiving a call, but solely determined by the scope of the patent claims.

## Claims

1. A device (100) for performing page scan on a first communication channel (CH1), **comprising:**
- set-up means (103, 101) for performing a page scan on said first communication channel (CH1);
- a first timer (151) for defining a first time interval (T_{GAP}(108)) between successive page scans;
- a second timer (152) for defining a second time interval (T_{GAP}(106)) between successive page scans, where the second interval (T_{GAP}(106)) is shorter than the first interval (T_{GAP}(108));
and wherein: the said set-up means (103, 101) are responsive to a second channel (CH2) communication means (103, 102) and adapted to:
- use the second timer (152) when a connection (CALL) on the second channel (CH2) is being initiated in the device (100); and
- use the first timer (151) when the connection on the second communication channel (CH2) has been initiated.

2. A device (100) of claim 1, **wherein:** the first communication channel (CH1) is a local communication channel; and the second communication channel (CH2) is a cellular radio communication channel.

3. A device (100) of claim 2, **wherein:** the said local communication channel is a Bluetooth communication channel.

4. A device (100) of claim 3, **wherein:** the said first interval (T_{GAP}(108)) is approximately 2.56 seconds.

5. A device (100) of claim 3 or 4, **wherein:** the said second interval (T_{GAP}(106)) is approximately 100 milliseconds.

6. A device (100) according to any one of preceding claims 1 to 5, **wherein:** the said set-up means (103, 101) are further adapted to perform the page scan only when an entry (161) showing that an accessory device (111) is present has been previously defined, or to inhibit performing the page scan when an entry (161) showing that an accessory device (111) is present has not been previously defined.

7. A device (100) of claim 6, **wherein:** said device (100) is a subscriber terminal of a cellular network (121) and said accessory device (111) is a wireless headset.

8. A method for performing page scan on a first communication channel (CH1), **wherein:** the page scan on the said first communication channel (CH1) is performed using:
- a first timer (152) for defining a first time interval (T_{GAP}(106)) between successive page scans when a connection (CALL) on the second communication channel (CH2) is being initiated; and
- a second timer (151) for defining a second time interval (T_{GAP}(108)), longer than the first time interval (T_{GAP}(108)), between successive page scans after the connection (CALL) on the second communication channel (GSM) has been initiated.

9. A method of claim 8, **wherein:** the first communication channel (CH1) is a local communication channel; and the second communication channel (CH2) is a cellular radio communication channel.

10. A method of claim 9, **wherein:** the said local communication channel is a Bluetooth communication channel.

11. A method of claim 10, **wherein:** the said first interval (T_{GAP}(106)) is approximately 100 milliseconds.

12. A method of claim 10 or 11, **wherein:** the said second interval (T_{GAP}(108)) is approximately 2.56 seconds.

13. A method according to any one of preceding claims 8 to 12, **wherein:** the page scan on the said first communication channel (CH1) is performed responsively to a second channel (CH2) communication only if an entry (161) showing that an accessory device (111) is present has been previously defined.
